# EUROPÄISCHE PATENTSCHRIFT

(11) **EP 3 808 560 B1**
(45) Veröffentlichungstag und Bekanntmachung des Hinweises auf die Patenterteilung: **06.11.2024**
(21) Anmeldenummer: 20194629.0
(22) Anmeldetag: 04.09.2020
(51) Int. Cl.: B32B 27/18, B32B 27/20, B32B 27/12, D06N 3/00

(54) **ATMUNGSAKTIVES MEHRSCHICHTIGES VERBUNDMATERIAL**
BREATHABLE MULTILAYER COMPOSITE MATERIAL
MATIÈRE COMPOSITE MULTICOUCHE RESPIRANT

(30) Priorität: 14.10.2019 DE 102019215710
(43) Veröffentlichungstag der Anmeldung: 21.04.2021
(73) Patentinhaber: Benecke Kaliko AG, 30419 Hannover (DE)
(72) Erfinder: Neumann, Thorsten, 30419 Hannover (DE); Heckel, Andreas, 30419 Hannover (DE); Kammerer, Birgit, 30419 Hannover (DE)
(74) Vertreter: Continental Corporation

(56) Entgegenhaltungen:
- EP-A1- 1 887 128

## Beschreibung

Die Erfindung betrifft ein atmungsaktives mehrschichtiges Kunstleder aus einem Verbundmaterial einzelner Schichten auf Basis von PVC oder Polyurethan, dieses umfassend mindestens eine sichtseitige Oberflächenschicht und mindestens eine unterhalb der Oberflächenschicht angeordnete Basisschicht, die jeweils mit durchgängig verlaufenden gas- und wasserdampfdurchlässigen Poren ausgebildet sind, wobei zumindest die Basisschichten Farbstoffe und/oder Pigmente enthalten und entsprechend eingefärbt sind.

Atmungsaktive Filme und solche atmungsaktive Filme umfassende mehrschichtige Verbundmaterialien sind bekannt, wozu beispielhaft auf die EP 2 918 629 B1 verwiesen wird. Die den Filmen und Verbundmaterialien innewohnende Atmungsaktivität beruht darauf, dass durchgängige Poren durch die einzelnen Schichten verlaufen, welche jedoch nicht auf eine mechanische Bearbeitung, zum Beispiel Nadelung, zurückgehen, sondern chemisch und ohne mechanische Bearbeitung in der jeweiligen Schicht ausgebildet werden, etwa wenn das Ausgangsmaterial der Schicht, zum Beispiel PVC oder Polyurethan, auf eine Unterlage gestrichen und unter Wärmezufuhr zu einem kompakten Film getrocknet und ausgeliert wird. Die dabei entstehenden Poren und die durch diese Poren bedingte Atmungsaktivität, worunter die Erfindung sowohl Luft- bzw. Gasdurchlässigkeit als auch Wasserdampfdurchlässigkeit versteht, sind dabei von außen nicht direkt durch Betrachtung mit dem menschlichen Auge optisch erkennbar bzw. ersichtlich. Eine Visualisierung der Funktion für den Anwender im Sinne von erkennbaren Poren, welche einen Luft- und Feuchtigkeitsaustausch erlauben, ist nicht gegeben. EP 1 887 128 A1 offenbart ein ein mehrschichtiges atmungsaktives Kunstleder.

Insbesondere wenn die genannten atmungsaktiven Filme und daraus hergestellten Verbundmaterialien beispielsweise zu Kunstleder verarbeitet werden, ist eine optische Abgrenzung der atmungsaktiven Filme bzw. Schichten zu nicht atmungsaktiven Filmen bzw. Schichten nicht gegeben, sodass der praktische Mehrwert der Atmungsaktivität anders als bei einer mechanischen Perforation, die aufgrund der Größe der erzeugten Perforationen ohne weiteres erkennbar ist, nicht oder nur durch Vergrößerungsoptiken erkennbar ist. Eine entsprechende Wertschätzung kann von daher nur durch praktische physikalische Erfahrung erfolgen. Dies ist sowohl aus Kunden-/Anwendersicht wie auch unter Vertriebsgesichtspunkten nachteilig.

Darüber hinaus sind die bisher bekannten Verbundmaterialien mit Poren unabhängig von verfügbaren Finishsystemen leicht anschmutzbar und nur schwierig zu reinigen, da entsprechende Verunreinigungen bzw. Anfärbemedien bis in die mit Füllstoffen oder Pigmenten versehene Oberflächenschicht eindringen und sich dort nicht mehr entfernen lassen.

Aufgabe der Erfindung ist es daher, atmungsaktive mehrschichtige Verbundmaterialien der eingangs genannten Art vorzuschlagen, deren Poren und die daraus herrührende Atmungsaktivität optisch hervortreten und von daher leicht sichtbar sind sowie gegebenenfalls für weitere Zwecke nutzbar gemacht werden können. Die Verbundmaterialien sollen darüber hinaus nur eine geringe Neigung zum Verschmutzen und gute Reinigungseigenschaften aufweisen.

Zur Lösung der gestellten Aufgabe wird erfindungsgemäß ein atmungsaktives mehrschichtiges Verbundmaterial gemäß den Merkmalen des Patentanspruches 1 vorgeschlagen.

Vorteilhafte Ausgestaltungen und Weiterbildungen der Erfindung sind Gegenstand der abhängigen Ansprüche.

Zur Lösung der gestellten Aufgabe wird vorgeschlagen, dass die mindestens eine Basisschicht zur Oberflächenschicht derart zueinander kontrastierend eingefärbt sind, dass bei Betrachtung der sichtseitigen Oberflächenschicht die in der Oberflächenschicht ausgebildeten Poren sichtbar sind.

Unter einer Sichtbarkeit beim Betrachten wird erfindungsgemäß die Betrachtung mit dem bloßen menschlichen Auge ohne optische Hilfsmittel verstanden.

Die erfindungsgemäß vorgeschlagene kontrastierende Einfärbung kann entweder durch unterschiedliche, zueinander kontrastierende Farbgebung bzw. Einfärbung der Oberflächenschicht und der mindestens einen Basisschicht erhalten werden oder aber die Konzentration der verwendeten Effektadditive und/oder Pigmente wird in der Oberflächenschicht und der mindestens einen Basisschicht so weit voneinander verschieden eingestellt, dass sich ein unterschiedlicher Farbkontrast ergibt.

Als Effektadditive und/oder Pigmente im Sinne der Erfindung kommen neben reinen Farbpigmenten insbesondere Metallic-Pigmente, Mattierungsmittel für die Erzeugung eines Milchglaseffekts, Iriodine, und/oder thermochrome Pigmente in Betracht.

Nach einem Vorschlag der Erfindung kann das atmungsaktive mehrschichtige Verbundmaterial ausgehend von der Oberflächenschicht mit einem Gehalt an Farbstoffen und Pigmenten in den einzelnen Schichten ausgebildet sein, die sukzessive in der Basisschicht oder über alle ggf. weiteren Basisschichten ansteigen. Beispielsweise wird die Oberflächenschicht in an sich bekannter Weise auf einer geeigneten Unterlage und durch entsprechende Pigmentierung in der Farbe Weiß erstellt, ausgeheizt, geliert und vernetzt, wodurch in dieser Oberflächenschicht durchgängige Poren zur Herstellung der Atmungsaktivität entstehen. Als Unterlage kann zum Beispiel ein Release-Papier, ein Narbband, eine Polyesterfolie, eine Metallfolie etc. verwendet werden, die nach Abschluss der Herstellung des mehrschichtigen Verbundmaterials abgelöst wird, um die Sichtseite der Oberflächenschicht freizulegen.

Auf die solchermaßen erstellte Oberflächenschicht wird sodann eine kontrastierend andersfarbige Basisschicht aufgetragen, die beispielsweise Schwarz pigmentiert ist. Abhängig von der Verweilzeit, Viskosität und Porengröße der Oberflächenschicht kann diese zunächst noch flüssige schwarze Masse vereinzelt in die Poren der Oberflächenschicht eindringen, wobei jedoch die Atmungsaktivität insgesamt weitgehend erhalten bleibt. Bei entsprechendem Ausheizen, Gelieren und Vernetzen der solchermaßen gebildeten Basisschicht fixiert diese haftfest mit der Oberflächenschicht. Wird anschließend die Unterlage von der Oberflächenschicht abgenommen, erkennt man im sichtbaren weißen Oberflächenfilm schwarze Punkte entsprechend den teilweise von der Basisschicht aufgefüllten Poren in der Oberflächenschicht. Auf diese Weise können die Poren leicht visualisiert werden.

Anstelle einer beispielsweise weißen Pigmentierung der Oberflächenschicht kann auch eine transparente oder transluzente, d. h. nur geringe bis gar keine Anteile an Farbstoffen und/oder Pigmente enthaltende Oberflächenschicht hergestellt und mit einer hierzu kontrastierenden Basisschicht kombiniert werden, um z.B. ein sogenanntes Stonewash-Design oder Vintagedesign zu erzeugen.

In an sich bekannter Weise kann darüber hinaus ein erfindungsgemäßes Verbundmaterial unterhalb der Basisschicht eine textile Trägerschicht umfassen, welches beispielsweise auf Basis von Polyester und/oder Baumwolle, Viskose, Polyurethan, Polyethylenterephthalat oder optisch leitfähigen Textilien unter Einsatz von z.B. Acrylglas-, Glas- und Nylonfasern ausgebildet ist. Eine solche textile Trägerschicht kann ein Gewebe, Gewirke oder Gestrick entsprechender Fasern sein oder auch auf Basis einer Folie zur Erzeugung einer Siebstruktur umfassen.

Die Luftdurchlässigkeit der Oberflächenschicht kann beispielsweise im Bereich von etwa 20 bis 2001 dm⁻² min⁻¹ liegen, wohingegen die Luftdurchlässigkeit des gesamten mehrschichtigen Verbundmaterials, bei dem die Poren der Oberflächenschicht zumindest teilweise von dem Material der Basisschicht aufgefüllt sind, immer noch bei etwa 5 bis 100 1 dm⁻² min⁻¹ beträgt, was für die gewünschte Atmungsaktivität beispielsweise im Rahmen der Verwendung als Kunstleder ausreichend ist.

Die erfindungsgemäß vorgesehene zueinander kontrastierende Einfärbung der Oberflächenschicht und der mindestens einen Basisschicht kann auch mehrere aufeinanderfolgende Basisschichten umfassen, wobei bevorzugt ist, einen Pigmentgradienten durch das erfindungsgemäßen Verbundmaterial aufzubauen, wobei die geringst pigmentierte Schicht von der Oberflächenschicht gebildet wird.

Eine weitere Möglichkeit der Visualisierung gemäß der Erfindung ist dann gegeben, wenn in der Oberflächenschicht beispielsweise dunkle cool-color Pigmente verwendet werden, welche im Infrarotbereich transparent sind und die so gebildete Oberflächenschicht von einer kontrastierenden Schicht, beispielsweise einer weiß eingefärbten Basisschicht gefolgt wird, wodurch bei Infrarot-Bilddarstellung eine Unterstruktur erkennbar wird. Dies kann beispielsweise im Bereich Branding wie auch im Bereich funktioneller Oberflächen mit einer nur geringen Erwärmung gegenüber thermischer Strahlung verwendet werden.

Das erfindungsgemäße Verbundmaterial weist nach einem weiteren Vorschlag der Erfindung Poren eines mittleren Porendurchmessers von bis zu 1 mm auf.

Weitere optische Effekte können erzielt werden, wenn die Oberflächenschicht durch entsprechende Rohstoffauswahl einen niedrigeren Brechungsindex als die angrenzende Basisschicht aufweist, sodass lokale Evaleszenzfelder aufgebaut werden, welche optisch durch Auskopplung des Lichts in der Fläche der Oberflächenschicht erkennbar werden.

Auch kann erfindungsgemäß vorgesehen sein, dass das Verbundmaterial im Bereich der Sichtseite der Oberflächenschicht profiliert ist, zum Beispiel mit einer Ledernarbe versehen ist, wobei durch unterschiedliche Tiefen in der verwendeten Narbstruktur weitere Tiefeneffekte erzeugt werden können. Die unterschiedlichen Tiefen in der Narbstruktur können beispielsweise durch entsprechende Profilierung der verwendeten Unterlage im Negativ vorgegeben werden.

Sofern die Oberflächenschicht des erfindungsgemäßen Verbundmaterials transparent ausgebildet wird, ergibt sich darüber hinaus die Möglichkeit, das Reinigungsverhalten des Verbundmaterials deutlich zu verbessern. Farbstoffe oder unerwünschte Anfärbemedien, wie zum Beispiel Indigo (Denim), Kaffee, Ruß und ölhaltige eingefärbte Medien können nicht mehr an den Grenzflächen von Pigmenten und/oder Farbstoffen in der Oberflächenschicht absorbiert werden, wodurch ein deutlich optimiertes Reinigungsverhalten und verringerte Anschmutzneigung erreicht werden. Eine gegebenenfalls erforderliche Reinigung kann durch wässrige und tensidhaltige Reinigungsmedien bewirkt werden, sodass auf unerwünschte Lösemittel-Reinigungsmedien weitgehend verzichtet werden kann.

Das vorangehend erläuterte Verbundmaterial eignet sich beispielsweise als Kunstleder für Sitzbezüge, etwa im Automobil- und Möbelbereich und erfüllt die einschlägigen Anforderungen, wie zum Beispiel
- Martindale Abrieb Cotton Duck 10 400k Touren
- Flexibilität 200kt bei RT
- Brennbarkeitstests M1-2, Grib 5, Kanten- und Flächenbeflammung, MVSS 302 Brennrate, B2 Kleinbrenner Kante/Fläche, Zigarette/Gasflamme BS5852-IS1+ 2
- Wasserdampfdurchlässigkeit 5 mg/h/cm²
- Luftdurchlässigkeit mindestens 10 1 dm⁻² min⁻¹
- Durchleuchtbarkeit
- Anschmutzverhalten gemäß ISO 26082-1 EMPA 104 und EMPA 128

## Patentansprüche

1. Atmungsaktives mehrschichtiges Kunstleder aus einem Verbundmaterial einzelner Schichten mindestens umfassend eine sichtseitige Oberflächenschicht und mindestens eine unterhalb der Oberflächenschicht angeordnete Basisschicht, die jeweils mit durchgängig verlaufenden gas- und wasserdampfdurchlässigen Poren ausgebildet sind, wobei zumindest die Basisschichten Farbstoffe und/oder Pigmente enthalten und entsprechend eingefärbt sind, **dadurch gekennzeichnet, dass** die mindestens eine Basisschicht zur Oberflächenschicht derart zueinander kontrastierend eingefärbt sind, dass bei Betrachtung der sichtseitigen Oberflächenschicht die in der Oberflächenschicht ausgebildeten Poren sichtbar sind.

2. Atmungsaktives mehrschichtiges Kunstleder nach Anspruch 1, **dadurch gekennzeichnet, dass** ausgehend von der Oberflächenschicht der Gehalt an Farbstoffen und Pigmenten in der mindestens einen Basisschicht sukzessive ansteigend ausgebildet ist.

3. Atmungsaktives mehrschichtiges Kunstleder nach einem der Ansprüche 1 oder 2, **dadurch gekennzeichnet, dass** die unterhalb der Oberflächenschicht angeordnete Basisschicht lichtemittierende Farbstoffe und/oder Pigmente enthält.

4. Atmungsaktives mehrschichtiges Kunstleder nach einem der Ansprüche 1 bis 3, **dadurch gekennzeichnet, dass** die Oberflächenschicht transparent ausgebildet ist.

5. Atmungsaktives mehrschichtiges Kunstleder nach einem der Ansprüche 1 bis 4, **dadurch gekennzeichnet, dass** die Poren einen mittleren Porendurchmesser von 1 µm bis 1 mm aufweisen.

6. Atmungsaktives mehrschichtiges Kunstleder nach einem der Ansprüche 1 bis 5, **dadurch gekennzeichnet, dass** es eine Luftdurchlässigkeit von 5 bis 100 1 dm⁻² min⁻¹ aufweist.

7. Atmungsaktives mehrschichtiges Kunstleder nach einem der Ansprüche 1 bis 6, **dadurch gekennzeichnet, dass** die Oberflächenschicht einen niedrigeren Brechungsindex als die angrenzende Basisschicht aufweist.

8. Atmungsaktives mehrschichtiges Kunstleder nach einem der Ansprüche 1 bis 7, **dadurch gekennzeichnet, dass** die Sichtseite der Oberflächenschicht profiliert ist.

9. Atmungsaktives mehrschichtiges Kunstleder nach einem der Ansprüche 1 bis 8, **dadurch gekennzeichnet, dass** die Poren in der Oberflächenschicht ungeordnet oder nach Art eines vorbestimmbaren Musters angeordnet sind

## Claims

1. Breathable multilayer synthetic leather composed of a composite material of individual layers at least comprising a facing-side surface layer and at least one base layer disposed below the surface layer, each of which layers is formed with traversing pores which are permeable for gas and water vapour, where at least the base layers contain dyes and/or pigments and are coloured accordingly, **characterized in that** the at least one base layer is coloured contrastingly to the surface layer in such a way that when the facing-side surface layer is viewed, the pores in the surface layer are visible.

2. Breathable multilayer synthetic leather according to Claim 1, **characterized in that** starting from the surface layer, the dyes and pigments content in the at least one base layer increases successively.

3. Breathable multilayer synthetic leather according to either of Claims 1 and 2, **characterized in that** the base layer disposed below the surface layer contains light-emitting dyes and/or pigments.

4. Breathable multilayer synthetic leather according to any of Claims 1 to 3, **characterized in that** the surface layer is transparent.

5. Breathable multilayer synthetic leather according to any of Claims 1 to 4, **characterized in that** the pores have a mean pore diameter of 1 µm to 1 mm.

6. Breathable multilayer synthetic leather according to any of Claims 1 to 5, **characterized in that** it has an air permeability of 5 to 100 l dm⁻² min⁻¹.

7. Breathable multilayer synthetic leather according to any of Claims 1 to 6, **characterized in that** the surface layer has a lower refractive index than the bordering base layer.

8. Breathable multilayer synthetic leather according to any of Claims 1 to 7, **characterized in that** the facing side of the surface layer is profiled.

9. Breathable multilayer synthetic leather according to any of Claims 1 to 8, **characterized in that** the pores in the surface layer are unordered or arranged in the manner of a predefinable pattern.

## Revendications

1. Cuir artificiel multicouche respirant à base d'une matière composite de couches individuelles au moins comprenant une couche superficielle du côté visible et au moins une couche de base disposée au-dessous de la couche superficielle, qui sont conçues chacune avec des pores traversants perméables aux gaz et à la vapeur d'eau, au moins les couches de base contenant des colorants et/ou pigments et étant colorées en conséquence, **caractérisé en ce que** ladite au moins une couche de base et la couche superficielle sont colorées de manière contrastée l'une par rapport à l'autre, de sorte qu'en observant la couche superficielle du côté visible les pores formés dans la couche superficielle sont visibles.

2. Cuir artificiel multicouche respirant selon la revendication 1, **caractérisé en ce que** la teneur en colorants et pigments de ladite au moins une couche de base est conçue en augmentant successivement à partir de la couche superficielle.

3. Cuir artificiel multicouche respirant selon l'une quelconque des revendications 1 et 2, **caractérisé en ce que** la couche de base disposée au-dessous de la couche superficielle contient des colorants et/ou pigments luminescents.

4. Cuir artificiel multicouche respirant selon l'une quelconque des revendications 1 à 3, **caractérisé en ce que** la couche superficielle est conçue transparente.

5. Cuir artificiel multicouche respirant selon l'une quelconque des revendications 1 à 4, **caractérisé en ce que** les pores présentent un diamètre moyen de pore de 1 µm à 1 mm.

6. Cuir artificiel multicouche respirant selon l'une quelconque des revendications 1 à 5, **caractérisé en ce qu'**il présente une perméabilité à l'air de 5 à 100 l dm⁻² min⁻¹.

7. Cuir artificiel multicouche respirant selon l'une quelconque des revendications 1 à 6, **caractérisé en ce que** la couche superficielle présente un indice de réfraction plus faible que la couche de base adjacente.

8. Cuir artificiel multicouche respirant selon l'une quelconque des revendications 1 à 7, **caractérisé en ce que** le côté visible de la couche superficielle est profilé.

9. Cuir artificiel multicouche respirant selon l'une quelconque des revendications 1 à 8, **caractérisé en ce que** dans la couche superficielle les pores sont désordonnés ou ordonnés à la manière d'un motif pré-déterminable.
